# EUROPÄISCHE PATENTANMELDUNG

(11) **EP 1 286 555 A1**
(43) Veröffentlichungstag der Anmeldung: **26.02.2003**
(21) Anmeldenummer: 01119965.0
(22) Anmeldetag: 18.08.2001
(51) Int. Cl.: H04Q 3/72, H04M 1/57

(54) **Verfahren und Anordnung zur akustischen Anzeige einer einem Telekommunikationsendgerät zugeordneten Identifikation**

(71) Anmelder: SIEMENS AKTIENGESELLSCHAFT, 80333 München (DE)
(72) Erfinder: Gubanec, Marko, 1351 Brezovica (SI); Mrak, Miha, 4000 Kranj (SI); Music, Franek, 4000 Kranj (SI); Pracek, Boris, 4000 Kranj (SI); Stare, Zvonko, 4000 Kranj (SI)
(74) Vertreter: Peham, Alois, Dipl.-Ing.

(57) **Zusammenfassung**

Es wird ein Verfahren und eine Anordnung zur akustischen Anzeige einer einem ersten Telekommunikationsendgerät (TEL1) zugeordneten Identifikation (ID) bei einem zweiten Telekommunikationsendgerät (TEL2) in einem Telekommunikationsnetz (NET) in Folge eines Verbindungswunsches zwischen erstem Telekommunikationsendgerät (TEL1) und zweitem Telekommunikationsendgerät (TEL2) angegeben. Dabei wird vorzugsweise der Name des Besitzers des ersten Telekommunikationsendgerätes (TEL1) in gesprochener Form an das zweite Telekommunikationsendgerät (TEL2) übermittelt.

## Beschreibung

Verfahren und Anordnung zur akustischen Anzeige einer einem Telekommunikationsendgerät zugeordneten Identifikation.

Die Erfindung betrifft ein Verfahren zur akustischen Anzeige einer einem ersten Telekommunikationsendgerät zugeordneten Identifikation bei einem zweiten Telekommunikationsendgerät in einem Telekommunikationsnetz in Folge eines Verbindungswunsches zwischen erstem Telekommunikationsendgerät und zweitem Telekommunikationsendgerät. Weiterhin betrifft die Erfindung eine Anordnung zur Durchführung des erfindungsgemäßen Verfahrens.

Durch die Vielzahl der Teilnehmer in einem Telekommunikationsnetz, die potentiell mit einem anderen Teilnehmer in Kontakt treten können, ist es nötig technische Hilfsmittel bereitzustellen, die es einem Nutzer eines Telekommunikationsendgerätes ermöglichen, auf einfache Weise festzustellen, welcher Teilnehmer des Telekommunikationsnetzes mit ihm in Kontakt treten möchte.

Aus dem Stand der Technik sind Funktionen eines Telekommunikationsnetzes bekannt, welche die Anzeige des rufenden Teilnehmers beim gerufenen Teilnehmer und umgekehrt ermöglichen. Ein Beispiel ist die Funktion "Calling Line Identification Presentation", kurz CLIP, welche die Anzeige des rufenden Teilnehmers beim gerufenen Teilnehmer ermöglicht. Die Anzeige des gerufenen Teilnehmer beim rufenden Teilnehmer wird dagegen durch die Funktion "Connected Line Identification Presentation", kurz COLP, ermöglicht. Beide Funktionen sind sowohl in drahtgebundenen Netzen, wie zum Beispiel in einem nach dem Standard "Integrated Services Digital Network" arbeitenden Netz, kurz ISDN-Netz, als auch in Mobilfunknetzen, wie beispielsweise in einem nach dem Standard "Global System for Mobile Communication" arbeitenden Netz, kurz GSM-Netz, bekannt.

Wird etwa die Rufnummer des rufenden Teilnehmers an das gerufene Telekommunikationsendgerät übermittelt, so wird meist die Rufnummer mit den Einträgen eines im gerufenen Telekommunikationsendgerät integrierten Telefonbuchs verglichen. In Abhängigkeit des Suchergebnisses wird daraufhin entweder der einer Rufnummer zugeordnete Name, sofern ein übereinstimmender Eintrag gefunden wurde, oder andernfalls die Rufnummer selbst dargestellt. Der Nutzer eines Telekommunikationsendgerätes kann also bereits vor dem Schalten eines Sprachkanals entscheiden, ob er das Gespräch zum rufenden Teilnehmer annehmen möchte oder nicht.

Bekannt ist auch, dass nicht die Rufnummer des rufenden Teilnehmers selbst, sondern ein der Rufnummer zugeordneter Name oder beides vom Telekommunikationsnetz an das Telekommunikationsendgerät übermittelt und dort angezeigt wird. Diese Technik findet weite Verbreitung bei firmeninternen Nebenstellenanlagen.

Nachteilig bei den erwähnten Verfahren ist jedoch, dass für die Nutzung der Dienste die Beobachtung einer Anzeigeeinheit des Telekommunikationsendgerätes nötig ist. In vielen Fällen ist dies aber nicht oder nur schwer möglich, beispielsweise wenn der Benutzer des Telekommunikationsendgerätes aus gesundheitlichen Gründen nicht in der Lage ist, eine Anzeigeeinheit abzulesen.

Wünschenswert ist es daher, auch akustisch zu signalisieren, welcher Teilnehmer des Telekommunikationsnetzes mit dem Nutzer des gerufenen Telekommunikationsendgerätes in Kontakt treten möchte.

Nach dem Stand der Technik kann daher einem Eintrag im internen Telefonbuch des Telekommunikationsendgerätes ein individuelles Rufsignal zugeordnet werden, das bei einem Anruf von einem dem Eintrag zugeordneten Telekommunikationsendgerät von einem Lautsprecher des gerufenen Telekommunikationsendgerätes abgestrahlt wird.

Vom Telekommunikationsendgerät "Ascom Eurit 40" ist weiterhin bekannt, dass einem Eintrag im internen Telefonbuch des Telefons eine individuelle Ansage zugeordnet werden kann, die bei einem Anruf von einem dem Eintrag zugeordneten Telekommunikationsendgerät abgespielt wird. Dabei kann alternativ dazu auch eine Rufmelodie ertönen.

Vom Telekommunikationsendgerät "Tiptel 195" ist bekannt, dass einem Eintrag im internen Telefonbuch des Telefons anstatt der Rufmelodie auch ein selbst aufgenommenes "Sample", also ein in der Regel einige Sekunden dauerndes akustisches Signal allgemeiner Natur, zugeordnet werden kann. Dies wird bei einem Anruf von einem dem Eintrag zugeordneten Telekommunikationsendgerät abgespielt.

Informationen über die beiden erwähnten Telekommunikationsendgeräte können unter der Internetadresse "http:\\www.isdn-tip.de" erhalten werden.

Aus der WO 00/18107 vom 30.3.2000 "System and method for identifying a calling party" ist weiterhin bekannt, dass einem Eintrag in einer Datenbank eines Mobilfunknetzes eine Information über eine Rufmelodie zugeordnet ist und dass diese Information bei einem Anruf von einem dem Eintrag zugeordneten Telekommunikationsendgerät an das gerufene Mobiltelefon übermittelt und die Melodie dort abgespielt wird.

Von dem Mobiltelefon "Panasonic GD92" ist überdies bekannt, dass auch in einem Mobiltelefon Sprache, Geräusche oder Musik als individuelle Rufsignale verwendet werden können. Informationen über dieses Gerät können unter der Internetadresse "http:\\www.panasonic.at" erhalten werden.

Die erwähnten Verfahren ermöglichen grundsätzlich also die akustische Signalisierung, welcher Teilnehmer des Telekommunikationsnetzes mit dem Nutzer des gerufenen Telekommunikationsendgerätes in Kontakt treten möchte, jedoch ist dabei die Verwendung eines speziell für diesen Zweck vorbereitetes Telekommunikationsendgerätes erforderlich. Unbekannt ist auch eine Methode beim rufenden Teilnehmer akustisch anzuzeigen, welcher Teilnehmer gerufen wurde.

Der Erfindung liegt also die Aufgabe zugrunde, ein Verfahren und eine Anordnung anzugeben, welche die akustische Anzeige einer einem ersten Telekommunikationsendgerät zugeordneten Identifikation bei einem zweiten Telekommunikationsendgerät in Folge eines Verbindungswunsches zwischen erstem Telekommunikationsendgerät und zweitem Telekommunikationsendgerät verbessern.

Die Aufgabe der Erfindung wird mit einem Verfahren der eingangs genannten Art gelöst,
- bei dem eine Sprechverbindung zwischen Telekommunikationsnetz und zweitem Telekommunikationsendgerät aufgebaut wird und
- bei dem die Identifikation des ersten Telekommunikationsendgerätes vom Telekommunikationsnetz akustisch, in Form von Sprache an das zweite Telekommunikationsendgerät übermittelt wird.

Da die dem ersten Telekommunikationsendgerät zugeordnete Identifikation bereits in gesprochener Form über die Sprechverbindung an das zweite Telekommunikationsendgerät übermittelt wird, kann das erfindungsgemäße Verfahren auch mit technisch einfach aufgebauten Telekommunikationsendgeräten genutzt werden. Die Erfindung eignet sich deswegen besonders bei Verwendung bereits existierender Telekommunikationsendgeräte, bei denen ein Umbau nur vergleichsweise schwierig durchzuführen wäre.

Dabei kann eine Verbindung zu einem Sprachautomaten hergestellt werden, wobei aber nur der Sprachkanal vom Sprachautomaten zum zweiten Telekommunikationsendgerät maßgebend ist. Sprachautomaten sind in Telekommunikationsnetzen oft ohnehin bereits vorhanden, weswegen die Einführung des erfindungsgemäßen Verfahrens mit nur vergleichsweise geringem technischen Aufwand verbunden ist.

Eine besonders vorteilhafte Ausgestaltung der Erfindung ist mit einem Verfahren gegeben,
- bei dem der Nutzer des zweiten Telekommunikationsendgerätes den Verbindungswunsch zum ersten Telekommunikationsendgerät annehmen oder abweisen kann, nachdem akustische Übermittlung der Identifikation gestartet wurde und
- bei dem bei Annnahme des Verbindungswunsches eine Sprechverbindung zwischen erstem Telekommunikationsendgerät und zweitem Telekommunikationsendgerät aufgebaut wird.

Oft ist es für den Nutzer eines Telekommunikationsendgerätes wünschenswert mit dem rufenden Teilnehmer nicht in Kontakt zu treten. Diese Variante der Erfindung bietet die Grundlage, ein Gespräch nur bei Annahme des Verbindungswunsches auch tatsächlich durchzuschalten. Das Abweisen oder Annehmen des Gesprächs kann dabei auch während der Übermittlung der Identifikation erfolgen.

Besonders vorteilhaft ist es auch, wenn als Identifikation eine dem ersten Telekommunikationsendgerät zugeordnete Rufnummer und/oder ein dem ersten Telekommunikationsendgerät zugeordneter Name, insbesondere der Name des Besitzers des ersten Telekommunikationsendgerätes, vorgesehen wird.

Für die Übermittlung der Rufnummer können bereits vorhandene Ressourcen eines Telekommunikationsnetzes verwendet werden, da die Rufnummer eines Telekommunikationsendgerätes ohnehin bereits im Telekommunikationsnetz verfügbar ist. Denkbar ist aber auch die Übermittlung eines dem Telekommunikationsendgerät zugeordneten Namens, welcher für die Nutzer eines Telekommunikationsnetzes in der Regel einprägsamer ist, als eine Rufnummer. Dies trifft besonders dann zu, wenn hierfür der Name des Besitzers eines Telekommunikationsendgerätes verwendet wird.

Eine günstige Variante der Erfindung ist gegeben, wenn die Identifikation mittels im Telekommunikationsnetz gespeicherter Informationen über das erste Telekommunikationsendgerät synthetisch erzeugt wird.

Da Sprachsynthesizer in Telekommunikationsnetzen oft bereits vorhanden sind und auch die Identifikation eines Telekommunikationsendgerätes in Form einer Rufnummer im Telekommunikationsnetz verfügbar ist, kann diese Variante des erfindungsgemäßen Verfahrens vergleichsweise einfach eingeführt werden.

Günstig ist es auch, wenn die Identifikation während eines Initialisierungsvorganges in Form von Sprache im Telekommunikationsnetz gespeichert und bei der Übermittlung der Identifikation an das zweite Telekommunikationsendgerät ausgelesen wird.

Ein wesentlicher Vorteil ist dabei dass die Identifikation, im Gegensatz zur Speicherung in den Telekommunikationsendgeräten, bei dieser Variante für jeden Teilnehmer im Telekommunikationsnetz verfügbar ist. Beispielsweise kann der Name eines neuen Teilnehmers im Telekommunikationsnetz vom Betreiber des Netzes bei dessen Anmeldung in gesprochener Form im Netz hinterlegt werden. Denkbar ist aber auch dass, der Teilnehmer selbst seinen Namen spricht und im Telekommunikationsnetz speichert. Auf diese Weise kann die Identifikation individuell gestaltet werden.

Die erfindungsgemäße Aufgabe wird weiterhin mit einem Telekommunikationsnetz gelöst,
- welches Mittel zur Speicherung einer einem ersten Telekommunikationsendgerät zugeordneten Identifikation umfasst,
- welches Mittel zur Umwandlung dieser Identifikation in eine akustische, gesprochene Form umfasst,
- welches Mittel für den Aufbau einer Sprechverbindung zum zweiten Telekommunikationsendgerät in Folge eines Verbindungswunsches zwischen erstem Telekommunikationsendgerät und zweitem Telekommunikationsendgerät umfasst und
- bei dem Mittel zum Senden der akustischen Identifikation des ersten Telekommunikationsendgerätes an das zweite Telekommunikationsendgerät über diese Sprechverbindung vorhanden sind.

Mittel zum Übersenden einer dem ersten Telekommunikationsendgerät zugeordnete Identifikation in gesprochener Form, sind beispielsweise Sprachautomaten, welche die im Telekommunikationsnetz gespeicherte Rufnummer eines Telekommunikationsendgerätes mittels Text-/Sprachumsetzung in die gewünschte Form umwandeln.

Ein Vorteil bei der Einführung der erfindungsgemäßen Anordnung ist, dass die Telekommunikationsendgeräte davon unberührt bleiben. Ein Betreiber eines Telekommunikationsnetzes kann diesen Dienst somit vergleichsweise einfach für alle Teilnehmer im Telekommunikationsnetz verfügbar machen. Auch hier gelten die für das erfindungsgemäße Verfahren erwähnten Vorteile.

Günstig ist es auch,
- wenn das Telekommunikationsnetz Mittel zur Annhame oder Abweisung des vom ersten Telekommunikationsendgeräts ausgehenden Verbindungswunschs umfasst und
- wenn im Telekommunikationsnetz Mittel zum Aufbau einer Sprechverbindung zwischen erstem Telekommunikationsendgerät und zweitem Telekommunikationsendgerät in Folge der Annnahme des Verbindungswunsches vorhanden sind.

Diese Variante der Erfindung bietet die Grundlage, ein Gespräch nur bei Annahme des Verbindungswunsches auch tatsächlich durchzuschalten. Für den Nutzer eines Telekommunikationsendgerätes kann es nämlich wünschenswert sein, mit dem rufenden Teilnehmer nicht in Kontakt zu treten.

Die Erfindung wird nun anhand eines in den Figuren dargestellten Ausführungsbeispiels näher erläutert, welches die akustische Anzeige einer einem ersten Telekommunikationsendgerät TEL1 zugeordneten Identifikation ID bei einem zweiten Telekommunikationsendgerät TEL2 in einem Telekommunikationsnetz NET betrifft.

Es zeigen:

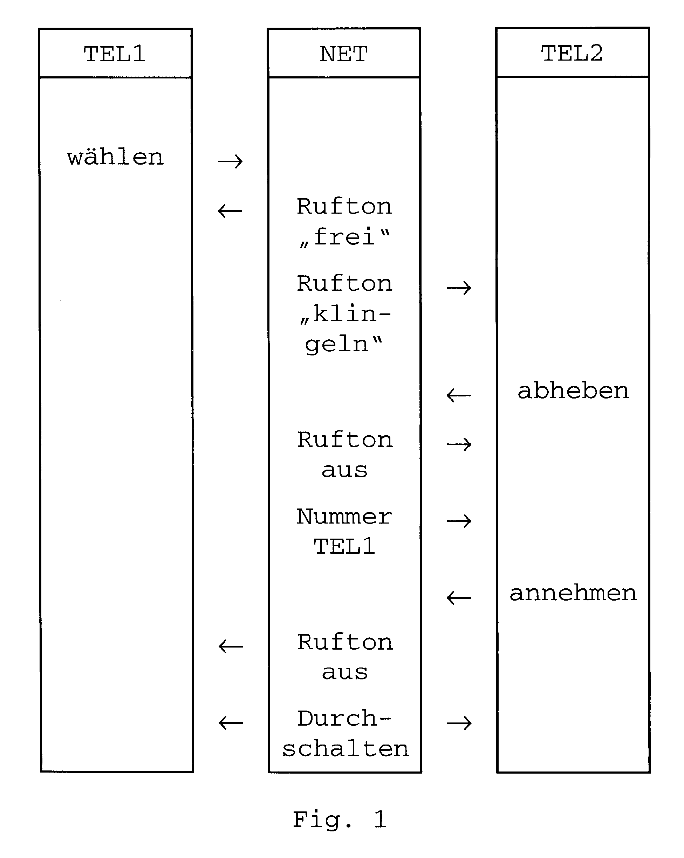

Figur 1: ein Meldungs-Ablaufdiagramm zwischen einem ersten Telekommunikationsendgerät TEL1, einem Telekommunikationsnetz NET und einem zweiten Telekommunikationsendgerät TEL2, wobei ausgehend vom ersten Telekommunikationsendgerät TEL1 ein Vermittlungswunsch an das Telekommunikationsnetz NET gesendet wird und sich das gerufene, zweite Telekommunikationsendgerät TEL2 im Freizustand befindet;

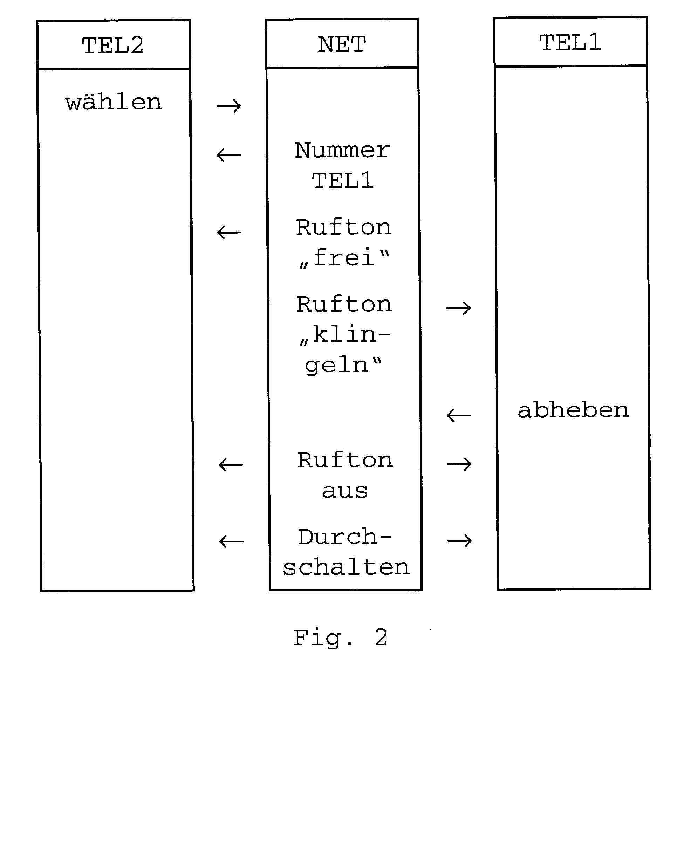

Figur 2: ein Meldungs-Ablaufdiagramm zwischen einem ersten Telekommunikationsendgerät TEL1, einem Telekommunikationsnetz NET und einem zweiten Telekommunikationsendgerät TEL2, wobei ausgehend vom zweiten Telekommunikationsendgerät TEL2 ein Vermittlungswunsch an das Telekommunikationsnetz NET gesendet wird;

Die Funktion des in Figur 1 dargestellten Verfahrens ist wie folgt:

Mittels erstem Telekommunikationsendgerät TEL1 wird vom Benutzer die Nummer des zweiten Telekommunikationsendgerätes TEL2 gewählt und damit ein Verbindungswunsch zum zweiten Telekommunikationsendgerät TEL2 an das Telekommunikationsnetz NET übermittelt. Daraufhin wird mit Hilfe des Telekommunikationsnetzes NET das Ertönen des Freizeichens beim ersten Telekommunikationsendgerät TEL1 und das Klingeln beim zweiten Telekommunikationsendgerät TEL2 ausgelöst. Hebt der Benutzer des zweiten Telekommunikationsendgerätes TEL2 ab, wird das Klingeln wieder abgeschaltet und eine dem ersten Telekommunikationsendgerät TEL1 zugeordnete Identifikation, im gezeigten Beispiel die Rufnummer, an das zweite Telekommunikationsendgerät TEL2 in gesprochener Form übermittelt. Der Nutzer des zweiten Telekommunikationsendgerätes TEL2 hat nun die Wahl, diesen Verbindungswunsch anzunehmen oder abzuweisen. Im gezeigten Beispiel wird der Verbindungswunsch angenommen, etwa durch Drücken einer für diesen Zweck vorgesehen Taste am zweiten Telekommunikationsendgerät TEL2. Daraufhin wird das Freizeichen beim ersten Telekommunikationsendgerät TEL1 abgeschaltet und die Sprechverbindung zwischen erstem und zweitem Telekommunikationsendgerät TEL1 und TEL2 hergestellt.

Aus Figur 2 ist zu entnehmen, wie die einem Telekommunikationsendgerät zugeordnete Identifikation beim rufenden Telekommunikationsendgerät akustisch angezeigt werden kann.

Mittels zweitem Telekommunikationsendgerät TEL2 wird vom Benutzer die Nummer des ersten Telekommunikationsendgerätes TEL1 gewählt und damit ein Verbindungswunsch zum ersten Telekommunikationsendgerät TEL1 an das Telekommunikationsnetz NET übermittelt. Vom Telekommunikationsnetzes NET wird danach die Rufnummer des ersten Telekommunikationsendgerätes TEL1 an das zweite Telekommunikationsendgerät TEL2 übermittelt. In Folge wird mit Hilfe des Telekommunikationsnetzes NET das Ertönen des Freizeichens beim zweiten Telekommunikationsendgerät TEL2 und das Klingeln beim ersten Telekommunikationsendgerät TEL1 ausgelöst. Hebt der Benutzer des ersten Telekommunikationsendgerätes TEL1 ab, wird das Klingeln beim ersten Telekommunikationsendgerät TEL1 sowie das Freizeichen beim zweiten Telekommunikationsendgerät TEL2 wieder abgeschaltet und die Sprechverbindung zwischen erstem und zweitem Telekommunikationsendgerät TEL1 und TEL2 hergestellt.

## Patentansprüche

1. Verfahren zur akustischen Anzeige einer einem ersten Telekommunikationsendgerät (TEL1) zugeordneten Identifikation (ID) bei einem zweiten Telekommunikationsendgerät (TEL2) in einem Telekommunikationsnetz (NET) in Folge eines Verbindungswunsches zwischen erstem Telekommunikationsendgerät (TEL1) und zweitem Telekommunikationsendgerät (TEL2),
**dadurch gekennzeichnet,**
- **dass** eine Sprechverbindung zwischen Telekommunikationsnetz (NET) und zweitem Telekommunikationsendgerät (TEL2) aufgebaut wird und
- **dass** die Identifikation des ersten Telekommunikationsendgerätes (TEL1) vom Telekommunikationsnetz (NET) akustisch, in Form von Sprache an das zweite Telekommunikationsendgerät (TEL2) übermittelt wird.

2. Verfahren nach Anspruch 1, **dadurch gekennzeichnet,**
- **dass** der Nutzer des zweiten Telekommunikationsendgerätes (TEL2) den Verbindungswunsch zum ersten Telekommunikationsendgerät (TEL1) annehmen oder abweisen kann, nachdem akustische Übermittlung der Identifikation (ID) gestartet wurde und
- **dass** bei Annnahme des Verbindungswunsches eine Sprechverbindung zwischen erstem Telekommunikationsendgerät (TEL1) und zweitem Telekommunikationsendgerät (TEL2) aufgebaut wird.

3. Verfahren nach einem der Ansprüche 1 bis 2, **dadurch gekennzeichnet, dass** als Identifikation (ID) eine dem ersten Telekommunikationsendgerät (TEL1) zugeordnete Rufnummer und/oder ein dem ersten Telekommunikationsendgerät zugeordneter Name, insbesondere der Name des Besitzers des ersten Telekommunikationsendgerätes (TEL1), vorgesehen wird.

4. Verfahren nach einem der Ansprüche 1 bis 3, **dadurch gekennzeichnet, dass** die Identifikation (ID) mittels im Telekommunikationsnetz (NET) gespeicherter Informationen über das erste Telekommunikationsendgerät (TEL1) synthetisch erzeugt wird.

5. Verfahren nach einem der Ansprüche 1 bis 3, **dadurch gekennzeichnet, dass** die Identifikation (ID) während eines Initialisierungsvorganges in Form von Sprache im Telekommunikationsnetz (NET) gespeichert und bei der Übermittlung der Identifikation (ID) an das zweite Telekommunikationsendgerät (TEL2) ausgelesen wird.

6. Telekommunikationsnetz,
- welches Mittel zur Speicherung einer einem ersten Telekommunikationsendgerät (TEL1) zugeordneten Identifikation (ID) umfasst,
- welches Mittel zur Umwandlung dieser Identifikation (ID) in eine akustische, gesprochene Form umfasst und
- welches Mittel für den Aufbau einer Sprechverbindung zum zweiten Telekommunikationsendgerät (TEL2) in Folge eines Verbindungswunsches zwischen erstem Telekommunikationsendgerät (TEL1) und zweitem Telekommunikationsendgerät (TEL2) umfasst,
**dadurch gekennzeichnet,**
- **dass** Mittel zum Senden der akustischen Identifikation (ID) des ersten Telekommunikationsendgerätes (TEL1) an das zweite Telekommunikationsendgerät (TEL2) über diese Sprechverbindung vorhanden sind.

7. Telekommunikationsnetz nach Anspruch 6, **dadurch gekennzeichnet,**
- **dass** dieses Mittel zur Annhame oder Abweisung des vom ersten Telekommunikationsendgeräts (TEL1) ausgehenden Verbindungswunschs umfasst und
- **dass** Mittel zum Aufbau einer Sprechverbindung zwischen erstem Telekommunikationsendgerät (TEL1) und zweitem Telekommunikationsendgerät (TEL2) in Folge der Annnahme des Verbindungswunsches vorhanden sind.
